(19) Europäisches Patentamt
European Patent Office
Office européen des brevets

(11) **EP 3 402 842 B1**

(12) **EUROPEAN PATENT SPECIFICATION**

(45) Date of publication and mention
of the grant of the patent:
**19.02.2020 Bulletin 2020/08**

(21) Application number: **17702457.7**

(22) Date of filing: **12.01.2017**

(51) Int Cl.:
*C08L 23/12* [(2006.01)]          *C08L 23/16* [(2006.01)]
*C08L 51/06* [(2006.01)]          *C09J 151/06* [(2006.01)]
*B32B 27/32* [(2006.01)]          *B32B 7/12* [(2006.01)]
*B32B 27/08* [(2006.01)]          *B32B 27/18* [(2006.01)]
*B32B 27/30* [(2006.01)]          *B32B 27/34* [(2006.01)]
*B32B 27/36* [(2006.01)]

(86) International application number:
**PCT/US2017/013220**

(87) International publication number:
**WO 2017/123782 (20.07.2017 Gazette 2017/29)**

(54) **POLYOLEFIN-BASED COMPOSITIONS, ADHESIVES, AND RELATED MULTI-LAYERED STRUCTURES PREPARED THEREFROM**

POLYOLEFINBASIERTE ZUSAMMENSETZUNGEN, HAFTSTOFFE UND ZUGEHÖRIGE, DARAUS HERGESTELLTE MEHRSCHICHTIGE STRUKTUREN

COMPOSITIONS À BASE DE POLYOLÉFINE, ADHÉSIFS, ET STRUCTURES MULTI-COUCHES APPARENTÉES PRÉPARÉES À PARTIR DE CES DERNIÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2016 US 201662278145 P**

(43) Date of publication of application:
**21.11.2018 Bulletin 2018/47**

(73) Proprietor: **Equistar Chemicals, LP
Houston, Texas 77010 (US)**

(72) Inventor: **LEE, Chun, D.
Houston
TX 77010 (US)**

(74) Representative: **Sacco, Marco et al
Equistar Chemicals, LP IP
Basell Poliolefine Italia S.r.l.
Intellectual Property
P.le Privato G. Donegani, 12
Casella Postale 19
44122 Ferrara (IT)**

(56) References cited:
**WO-A1-2015/142602      US-A1- 2003 050 401
US-A1- 2012 329 929**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS REFERENCE TO RELATED APPLICATIONS

FIELD OF THE INVENTION

In general, the present disclosure relates to polyolefin-based compositions useful as adhesives, tie-layer adhesives for multi-layered structures, and compatibilizers.

BACKGROUND OF THE INVENTION

Tie-layer adhesives may be used to bond polyolefins to dissimilar substrates in multi-layer, co-extruded structures for beverage and food containers (*e.g.*, bags, shrink bags, pouches, casings, trays, lidded trays, overwrapped trays, form shrink packages, vacuum skin packages, flow wrap packages, thermoformed packages, packaging inserts or combinations thereof), medicine and makeup containers, shipping packaging, electronic components, synthetic fibers, fiberfill applications (*e.g.*, home insulation, cushions, and pillows), and metal laminate applications (*e.g.*, building and construction products, business and consumer products, containers and packaging products, electrical equipment, machinery and industrial equipment, signs and displays, and transportation products). The adhesives can be used in lamination, extrusion (or coextrusion), sheet extrusion, extrusion coating, injection molding, blow molding, melt thermoforming, and other processes. US 2012/329929 discloses a hot melt adhesive composition comprising a first copolymer comprising the reaction product of a functionalized polyethylene, a propylene-alphaolefin polymer comprising at least 50 mole % propylene and a free radical initiator. US 2003/050401 discloses a crosslinked, predominantly polypropylene-based article comprising: (a) a silane-modified ethylene-based polyolefin comprising either a silane-grafted polyolefin or a silane-olefin copolymer; (b) at least 50 percent by weight of a non silane-modified polypropylene; and (c) a silanol condensation catalyst. WO 2015/142602 relates to polyolefin-based compositions comprising a grafted polyolefin comprising a polyolefin grafted with an unsaturated monomer, e.g. maleic anhydride, and a polypropylene, e.g. a polypropylene impact random copolymer.

Commercial polypropylene tie layer resins can be produced by let-down of maleic anhydride grafted polypropylene with other polypropylene grades. Those maleated polypropylenes can be produced by grafting the maleic anhydride onto the polypropylene backbone in the presence of relatively high amounts (> 1.5 weight percent) of organic peroxide

through high temperature twin screw extrusion.

Peroxide addition at levels greater thank 1.5 wt. % may result in (a) the formation of waxy species, having molecular weight (Mw) less than 2000 and (b) an increase of the yellowness index. This level of waxy species can adversely affect the clarity of resulting barrier films.

To remove the waxy material, a solvent extraction process can be employed. The solvent extraction process can be tedious, time consuming, costly, and detrimental to the environmental.

BRIEF SUMMARY OF THE INVENTION

In general embodiments, the present disclosure provides for a polyolefin-based composition made from or containing:

(A) a first polymer composition made from or containing an ethylene polymer grafted with an unsaturated monomer, and

(B) a second polymer composition comprising a propylene polymer,

wherein the ethylene polymer grafted with an unsaturated monomer is covalently bonded to the propylene polymer and wherein the propylene polymer is an impact polypropylene copolymer.

In some embodiments, the present disclosure provides a polyolefin-based composition made from or containing:

(A) an ethylene polymer grafted with an unsaturated monomer covalently bonded to a propylene polymer, wherein the propylene polymer is an impact polypropylene copolymer, yielded from the free-radical reactive blending of;

(i) 20 to 70 weight percent of a first polymer composition, elative to the total weight of the polyolefin-based composition, made from or containing an ethylene polymer grafted with an unsaturated monomer, and

(ii) 30 to 80 weight percent of a second polymer composition, relative to the total weight of the polyolefin-based composition, made from or containing a propylene polymer;

in the presence of

(iii) 0.01 to 3.0 weight percent of a mobile liquid reactant, relative to the total weight of the polyolefin-based composition, made from or containing an organic peroxide.

In some embodiments, the present disclosure provides for an adhesive made from or containing the polyolefin-based composition.

In some embodiments, the present disclosure provides a multi-layered structure made from or containing:

(A) a tie-layer adhesive made from or containing:

(i) a polyolefin-based composition made from or containing:

(a) a first polymer composition made from or containing an ethylene polymer grafted with an unsaturated monomer; and
(b) a second polymer composition made from or containing a propylene polymer, wherein the propylene polymer is an impact polypropylene copolymer

wherein the ethylene polymer grafted with an unsaturated monomer is covalently bonded to the propylene polymer;

(B) a polymer layer; and

(C) a substrate layer.

In some embodiments, the present disclosure provides for a process containing:

(A) the adding step of combining:

(i) a first polymer composition made from or containing an ethylene polymer grafted with an unsaturated monomer,

(ii) a second polymer composition made from or containing a propylene polymer, and

(iii) a mobile liquid reactant composition made from or containing an organic peroxide;

(B) the free-radical generation step of decomposing the mobile liquid reactant to form free radicals,

(C) the treating step of treating at least one of the polymer components with the free radicals to form reactive sites on the polymer components,

(D) the blending step of agitating the residual non-treated polymer components and the free-radical-treated polymer components,

(E) the reacting step of covalently bonding the reactive sites of the free-radical-treated polymer components to the residual non-treated polymer components, other free-radical-treated polymer components, or both, and

(F) the collecting step of collecting the blended, reaction products as the polyolefin-based composition.

BRIEF DESCRIPTION OF THE DRAWINGS

The following figures illustrate alternative embodiments of the subject matter disclosed herein. The claimed subject matter may be understood by reference to the following description taken in conjunction with the accompanying figures, in which like reference numerals identify like elements, and in which:

FIG. 1A shows a crystallization curve generated by differential scanning calometry (DSC) analysis for a blend of an impact polypropylene and a maleic anhydride-grafted, high-density polyethylene.

FIG. 1B shows a crystallization curve for a polymeric composition resulting from a reactive blend of (i) the impact polypropylene, (ii) the maleic anhydride-grafted, high-density polyethylene, and (iii) an organic peroxide.

FIG. 2A shows a micrograph obtained using a Hitachi S-3500 Scanning Electron Microscope (SEM) at an accelerated voltage of 5 kV from an extrudate's surface fractured under liquid nitrogen for a blend of an impact polypropylene and a maleic anhydride-grafted, high-density polyethylene.

FIG. 2B shows a micrograph for a polymeric composition resulting from a reactive blend of (i) the impact polypropylene, (ii) the maleic anhydride-grafted, high-density polye thylene, and (iii) an organic peroxide.

DETAILED DESCRIPTION OF THE INVENTION

As used in this specification and the claims, the singular forms "a," "an," and "the" include plural referents unless the context dictates otherwise.

As used in this specification and the claims, the terms "comprising," "containing," or "including" mean that at least the named compound, element, material, particle, or method step, *etc.*, is present in the composition, the article, or the method, but does not exclude the presence of other compounds, elements, materials, particles, or method steps, *etc.*, even if the other such compounds, elements, materials, particles, or method steps, *etc.*, have the same function as that which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is a means for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

Definitions

In the present description, the term "additives composition" refers to a composition made from or containing at least one additive.

In the present description, the terms "adhesive layer" and "tie layer" mean a layer or material placed on one or more substrates to promote the adhesion of that substrate to another layer. Adhesive layers can be positioned between two layers of a multilayer structure to maintain the two layers in position relative to each other and prevent delamination.

In the present description, the term "α-olefin" or "alpha-olefin" means an olefin of formula $CH_2=CH-R$, wherein R is a linear or branched alkyl containing from 1 to 10 carbon atoms. The α-olefin can be selected, for example, from propylene, 1-butene, 1-pentene, 1-hexene, 1-octene, 1-dodecene and the like.

In the present description, the term "first" refers to the order in which a particular species is presented and does not necessarily indicate that a "second" species will be presented. For example, "first polymer composition" refers to the first of at least one polymer composition. The term does not reflect priority, importance, or significance in any other way. Similar terms used that can be used herein include "second," "third," "fourth," etc.

In the present description, the term "grafted polyolefin" refers to a polyolefin grafted with an unsaturated monomer. The unsaturated monomer can be an unsaturated polar monomer and contain one or more oxygen atoms.

In the present description, the term "grafted polyolefin composition" refers to a composition made from or containing at least one grafted polyolefin.

In the present description, the term "homopolymer" as used herein is consistent with its ordinary meaning. To the extent that a homopolymer can contain one or more monomeric units, the incorporation of any additional monomeric units has no measurable effect on the polymer's primary, secondary or tertiary structure or no effect on the polymer's physical or chemical properties. In other words, there is no measureable difference between a polymer comprising 100 weight percent of a first monomeric unit, and a co-polymer that includes more than one monomeric units.

In the present description, the term "interpolymer" means a polymer prepared by the polymerization of at least two types of monomers or comonomers. It includes, but is not limited to, copolymers (which can refer to polymers prepared from two different types of monomers or comonomers, although it can be used interchangeably with "interpolymer" to refer to polymers made from three or more different types of monomers or comonomers), terpolymers (which can refer to polymers prepared from three different types of monomers or comonomers), tetrapolymers (which can refer to polymers prepared from four different types of monomers or comonomers), and the like.

In the present description, the terms "monomer" and "comonomer" are used interchangeably. The terms mean any compound with a polymerizable moiety that is added to a reactor in order to produce a polymer. In those instances in which a polymer is described as comprising one or more monomers, *e.g.,* a polymer comprising propylene and ethylene, the polymer, of course, comprises units derived from the monomers, e.g., -$CH_2$-$CH_2$-, and not the monomer itself, e.g., $CH_2$=$CH_2$.

In the present description, "plastic film packaging" is of particular concern and discussed throughout this description. To faciliate that discussion, various polymer acronyms are used herein. When referring to blends of polymers, the description can use a colon (:) to indicate that the components to the left and right of the colon are blended. When referring to a multi-layer structure, the description can use a slash "/" to indicate that components to the left and right of the slash are in different layers and the relative position of components in layers can be so indicated by use of the slash to indicate layer boundaries.

Acronyms employed herein include:

EAA: Copolymer of ethylene with acrylic acid

EAO: Copolymers of ethylene with at least one alpha-olefin

EBA: Copolymer of ethylene with butyl acrylate

EEA: Copolymer of ethylene with ethyl acrylate

EMA: Copolymer of ethylene with methyl acrylate

EMAA: Copolymer of ethylene with methacrylic acid

EVA: Copolymer of ethylene with vinyl acetate

EVOH: Saponified or hydrolyzed copolymer of ethylene and vinyl acetate

PB: Polybutylene-1 (a butylene homopolymer or copolymer of a major portion of butylene-1 with one or more alpha-olefins)

PE: Polyethylene (an ethylene homopolymer or copolymer of a major portion of ethylene with one or more alpha-olefins)

PP: Polypropylene homopolymer or copolymer

PET: Polyethylene terephthalate

PETG: Glycol-modified polyethylene terephthalate

PLA: Polylactic acid

PVDC:Polyvinylidene chloride (also includes copolymers of vinylidene chloride, such as with vinyl chloride or methyl acrylate (MA)).

In the present description, the term "polymer" means a macromolecular compound prepared by polymerizing monomers of the same or different type. The term "polymer" includes homopolymers, copolymers, terpolymers, interpolymers, and related compositions.

In the present description, the term "polymer composition" refers to a composition made from or containing at least one polymer.

In the present description, the term "polyolefin" is used herein to include polymers such as polyethylene, ethylene-alpha olefin copolymers (EAO), polypropylene, polybutene, and ethylene copolymers having at least about 50 percent by weight of ethylene polymerized with a lesser amount of a comonomer such as vinyl acetate, and other polymeric resins within the "olefin" family classification.

Polyolefins can be made by a variety of processes including batch and continuous processes using single, staged, or sequential reactors, slurry, solution, and fluidized bed processes and one or more catalysts including for example, heterogeneous and homogeneous systems and Ziegler, Phillips, metallocene, single-site, and constrained geometry catalysts to produce polymers having different combinations of properties.

In the present description, the term "reactive blend" refers to the resulting blend prepared from a mixture of a first polymer component, a second polymer component, and a mobile liquid reactant, wherein (i) under free-radical generation conditions, the mobile liquid reactant decomposes to form free radicals, (ii) at least one of the polymer components is treated with the free radicals, and (iii) the mixture is blended at least partially during the free-radical treatment. For example, the free-radical treatment may cause the polymer components to undergo modifications such as chain scission or hydrogen abstraction.

In the present description, the term "room temperature" refers to a temperature around 25 degrees Celsius.

In the present description, the term "thermoplastic polymer" means a polymer that softens when exposed to heat and returns to its original condition when cooled to room temperature.

In the present description, the term "crystallization point" or "Tc" means the temperature at which a polymer crystallizes.

Testing

ASTM D 792 is entitled "Test Methods for Density and Specific Gravity (Relative Density) of Plastics by Displacement." The term "ASTM D 792" as used herein refers to the standard test method for determining the specific gravity (relative density) and density of solid plastics in forms such as sheets, rods, tubes, or molded items. The test method includes determining the mass of a specimen of the solid plastic in air, determining the apparent mass of the specimen upon immersion in a liquid, and calculating the specimen's specific gravity (relative density). This test method was approved on June 15, 2008 and published July 2008,.

ASTM D 1238 is entitled "Test Method for Melt Flow Rates of Thermoplastics by Extrusion Plastometer." The term "ASTM D 1238" as used herein refers to a test method covering the determination of the rate of extrusion of molten thermoplastic resins using an extrusion plastometer. After a specified preheating time, resin is extruded through a die with a specified length and orifice diameter under prescribed conditions of temperature, load, and piston position in the barrel. This test method was approved on February 1, 2012 and published March 2012.

Throughout the present description and claims, the standard melt index values of polyethylene polymers are measured according to ASTM D 1238, using a piston load of 2.16 kg and at a temperature of 190 degrees Celsius.

Throughout the present description and claims, the standard melt flow rate values of polypropylene polymers are measured accordingto ASTM D 1238, using a piston load of 2.16 kg and at a temperature of 230 degrees Celsius.

ASTM D 1505 is entitled "Standard Test Method for Density of Plastics by the Density-Gradient Technique." The term "ASTM D 1505" as used herein refers to a test method based on observing the level to which a test specimen sinks in a liquid column exhibiting a density gradient, in comparison with standards of known density. This test method was approved on July 1, 2010 and published in September 2010.

ASTM D 1925 (Withdrawn) is entitled "Test Method for Yellowness Index of Plastics." The term "ASTM D 1925" as used herein refers to a measure of the yellowing of a plastic, such as might occur after long-term exposure to light. The deviation in chroma from whiteness or water-whiteness in the dominant wavelength range from 570 to 580 nm as compared to a magnesium oxide standard. This test method was approved in 1988 and withdrawn in 1995

ASTM D 3418 is entitled "Standard Test Method for Transition Temperatures and Enthalpies of Fusion and Crystallization of Polymers by Differenial Scanning Calorimetry." The term "ASTM D3418" as used herein refers to determination of transition temperatures and enthalpies of fusion and crystallization of polymers by differential scanning calorimetry and applies to polymers in granular form or to any fabricated shape from which it is possible to cut appropriate specimens. This test method was approved in 2015,.

ASTM D 4440 is entitled "Standard Test Method for Plastics: Dynamic Mechanical Properties Melt Rheology." The term "ASTM D 4440" as used herein refers to a means of characterizing the rheological properties and viscosity of thermoplastic polymers using very small amounts of material (approximately 25 to 50 mm in diameter by 1 to 3 mm in thickness; approximately 3 to 5 g). Viscosity data at low shear (0.0398 rad/sec) and high shear (100 rad/sec) were determined by parallel plates geometry at 210 degrees Celsius using an ARES rheometer.

ASTM E 1356 is entitled "Standard Test Method for Assignment of the Glass Transition Temperatures by Differential Scanning Calorimetry." The term "ASTM E1356" as used herein refers to a rapid test method for determining changes in specific heat capacity in a homogeneous material, wherein the glass transition is manifested as a step change in specific heat capacity. This test method is applicable to amorphous materials or to partially crystalline materials containing amorphous regions that are stable and do not undergo decomposition or sublimation in the glass transition region. This test method was approved in 2008.

For the referenced ASTM standards, visit the ASTM website, www.astm.org, or contact ASTM Customer Service at service@astm.org.

Die Swell: Pellets were extruded through a melt index die having a diameter of Di, at 230 degrees Celsius with a weight of 21.6 kg. The extrudates were cooled at room temperature and measured for diameter, De. Die swell was obtained in accordance with the following formula:

$$\% \text{ Die Swell} = ((De - Di)/Di) * 100.$$

Incorporated Unsaturated Monomer (Weight Percent): The amount of the unsaturated monomer incorporated into the grafted polyolefin can be measured by wet chemical methods (titration, etc.) or Fourier transform infrared spectroscopy (FTIR).

Nuclear Magnetic Resonance Measurement of Ethylene and Propylene Content: Pellet samples are dissolved with 1,3,4-trichlorobenzene/o-dichlorobenze-d4 (4:1 ratio). The samples are heated at 125 degrees Celsius until dissolved. The $^{13}$C NMR spectra are obtained on a Bruker Avance 500 spectrometer using an inverse gated decoupling scheme. Triad distributions and C2 and C3 content are calculated based on the integrated peak areas of the spectrum.

Xylene Solubles for Polymers (percent by weight): 2 g of polymer are dissolved in 200 ml of xylene. Sample is refluxed to dissolve for 1.5 hours to bring to temperature of 140 degrees Celsius and air cooled for 15 minutes. Then, the sample is waterbath cooled at 25 degrees Celsius for 30 minutes. The precipitate is filtered with filter paper and dried in a weighed dish for measurement.

In general embodiments, the present disclosure provides a polyolefin-based composition made from or containing:

(A) a first polymer composition made from or containing an ethylene polymer grafted with an unsaturated monomer, and

(B) a second polymer composition comprising a propylene polymer, wherein the propylene polymer is an impact polypropylene copolymer wherein the ethylene polymer grafted with an unsaturated monomer is covalently bonded to the propylene polymer.

The First Polymer Composition: Ethylene Polymer Grafted With An Unsaturated Monomer

In an embodiment, the first polymer composition is present in an amount from [0060] 20 to 70 weight percent, relative to the total weight of the polyolefin-based composition. The first polymer composition can be present in an amount from about 25 to about 70 weight percent. In some embodiments, the first polymer composition is present in 25, 30, 35, 40, 45, 50, 55, 60, 65, 70, or an intermediate weight percent, relative to the total weight of the polyolefin-based composition.

The ethylene polymer grafted with an unsaturated monomer for use in making the first grafted polymer composition can be prepared by reacting an ethylene polymer with unsaturated monomers at elevated temperatures, with or without a free-radical initiator, under conditions effective to graft unsaturated monomer units onto the ethylene polymer backbone. Alternatively, the grafting reaction may occur under an inert gas, such as nitrogen.

Examples of ethylene polymers for making the grafted ethylene polymer for use in the first grafted polymer composition include high-density polyethylenes (HDPE), medium density polyethylenes (MDPE), low density polyethylenes (LDPE), linear low density polyethylenes (LLDPE), and the like, and blends thereof. In some embodiments, the ethylene polymer is an HDPE.

In some embodiments, the unsaturated monomers are ethylenically unsaturated carboxylic acids and acid derivatives, such as esters, anhydrides, acid salts, and related compounds. Examples include acrylic acid, methacrylic acid, maleic acid, fumaric acid, itaconic acid, citraconic acid, maleic anhydride, tetrahydrophthalic anhydride, norborn-5-ene-2,3-dicarboxylic acid anhydride, nadic anhydride, himic anhydride, and mixtures thereof. In various embodiments, maleic anhydride may be used. Other unsaturated monomers are described in U.S. Patent No. 6,385,777 and U.S. Patent Application Publication No. 2007/0054142,

In some embodiments, the ethylene polymer grafted with an unsaturated monomer is a high-density polyethylene (HDPE) grafted with maleic anhydride.

The relative amounts of ethylene polymer and unsaturated monomer used will vary and depend on factors such as the nature of the ethylene polymer and the unsaturated monomer, the desired tie-layer properties, the reaction conditions, the available equipment, and other factors. In some embodiments, the unsaturated monomer is used in an amount within the range of 0.1 to 15 weight percent, based on the total weight of the grafted ethylene polymer. In other embodiments, the unsaturated monomer is used in an amount fromt 0.5 to 6 weight percent. In yet other embodiments, the unsaturated monomer is used in an amount from 1 to 3 weight percent. In still other embodiments, the unsaturated monomer is present in 1 1, 1.2, 1.3, 1.4, 1.5, 1.6, 1.7, 1.8, 1.9, 2.0, 2.1, 2.2, 2.3, 2.4, or 2.5 weight percent.

Grafting of the unsaturated monomer(s) to the ethylene polymer can be accomplished by heating a mixture of the unsaturated monomer(s) and the ethylene polymer. The grafted ethylene polymer can be prepared by melt blending the ethylene polymer with the unsaturated monomer in a shear-imparting extruder/reactor. Twin screw extruders such as those marketed by Coperion under the designations ZSK-53, ZSK-83, ZSK-90 and ZSK-92 may be useful for performing the grafting step. A free-radical initiator such as an organic peroxide can be employed.

Grafting of the unsaturated monomer to the ethylene polymer is performed at elevated temperatures. Shear rates in the extruder can vary over a wide range.

In some embodiments, the ethylene polymer grafted with an unsaturated monomer has a density in the range of 0.93 to 0.98 grams per cubic centimeter. In other embodiments, the density is 0.93, 0.94, 0.95, 0.96, 0.97, or 0.98 grams per cubic centimeter.

In some embodiments, the ethylene polymer grafted with an unsaturated monomer has a melt index in the range of 2.0 to 20.0 grams per 10 minutes, measured according to ASTM D 1238, using a piston load of 2.16 kg and at a temperature of 190 degrees Celsius. In other embodiments, the melt index is 2, 3, 4, 5, 6, 7, 8, 9, 10, 11, 12, 13, 14,15,16,17, 18, 19, or 20 grams per 10 minutes.

The Second Polymer Composition: Propylene Polymer

In an embodiment, the second polymer composition is present in an amount from 30 to 80 weight percent, relative to the total weight of the polyolefin-based composition. The second polymer composition can be present in an amount from 30 to 75 weight percent. In some embodiments, the second polymer composition is present in 30, 35, 40, 45, 50, 55, 60, 65, 70, 75, or an intermediate weight percent, relative to the total weight of the polyolefin-based composition.

The propylene polymer is a propylene-ethylene impact copolymer.

In particular embodiments, the impact copolymers of propylene and ethylene are produced using gas-phase, stirred-bed polymerization processes. Poplyene-ethylene impact copolymers may be reactor-made intimate mixtures of propylene homopolymer and propylene-ethylene copolymer. More specifically, poplyene-ethylene impact copolymers may be produced in two reactors connected in series using high activity supported transition metal catalysts. Propylene homopolymer may be produced in the first reactor and then introduced to the second reactor where additional propylene, ethylene, hydrogen and catalyst, as desired, are metered to produce the intimate physical mixtures which comprise the propylene-ethylene impact copolymers utilized in various embodiments of the present disclosure. Gas phase polymerizations of this type are described in the article by Ross, et al., entitled "An Improved Gas-Phase Polypropylene Process" in Ind. Eng. Chem. Prod. Res. Dev. 1985, 24, 149-154,.

Propylene-ethylene impact copolymers produced in gas-phase polymerizations of the above types are comprised of crystalline (propylene homopolymer) and amorphous or rubber (ethylene-propylene copolymer) phases.

In some embodiments, the propylene polymer has propylene content in the range of 70 to 95 weight percent propylene-derived units, relative to the total weight of the propylene polymer. In other embodiments, the propylene content is 70, 75, 80, 85, 90, 95, or an intermediate weight percent propylene-derived units, relative to the total weight of the propylene polymer.

In some embodiments, the propylene polymer has ethylene content in the range of 5 to 30 weight percent ethylene-derived units, relative to the total weight of the propylene polymer. In other embodiments, the ethylene content is 5, 10, 15, 20, 25, or 30, or an intermediate weight percent ethylene-derived units, relative to the total weight of the propylene polymer.

In some embodiments, the propylene polymer has a density in the range of 0.87 to 0.92 grams per cubic centimeter. In other embodiments, the density is 0.87, 0.88, 0.89, 0.90, 0.91, or 0.92 grams per cubic centimeter.

In some embodiments, the propylene polymer has a melt flow rate in the range of 1.0 to 10.0 grams per 10 minutes, measured according to ASTM D 1238, using a piston load of 2.16 kg and at a temperature of 230 degrees Celsius. In other embodiments, the melt flow rate is 1, 2, 3, 4, 5, 6, 7, 8, 9, or 10 grams per 10 minutes.

In some embodiments, the propylene polymer has a xylene soluble content in the range of 10 to 20 weight percent, relative, to the total weight of the propylene polymer. In other embodiments, the xylene soluble content is 10, 11, 12, 13, 14, 15, 16, 17, 18, 19, or 20 weight percent, relative to the total weight of the propylene polymer.

The Covalent Bond: Formation In The Presence of Mobile Liquid Reactant

In an embodiment, the covalent bond between the ethylene polymer grafted with an unsaturated monomer and the propylene polymer is formed in the presence of a mobile liquid reactant. In some embodiments, the mobile liquid reactant is present in an amount from 0.01 to 3.0 weight percent, relative to the total weight of the polyolefin-based composition. In other embodiments, the mobile liquid reactant is present in 0.1, 0.5, 1.0, 1.5, 2.0, 2.5, 3.0, or an intermediate weight percent, relative to the total weight of the polyolefin-based composition.

In some embodiments, the mobile liquid reactant is an organic peroxide.

The covalently bonded products may be prepared by melt blending the grafted ethylene polymer and the propylene impact copolymer with the mobile liquid reactant (i.e., the free radical generating catalyst) in a shear-imparting reactor, such as an extruder/reactor. Twin screw extruder/reactors such as those marketed by Coperion under the designations ZSK-53 and ZSK-83 can be used.

In one embodiment, the organic peroxide is introduced to the molten polymeric composition. The free-radical reaction is carried at a temperature selected to minimize or avoid rapid vaporization and organic peroxide loss.

In an embodiment, the temperature profile where the temperature of the polymer melt can increases gradually through the length of the extruder/reactor up to a maximum in the grafting reaction zone and then decrease toward the reactor exit. The maximum temperature within the reactor should be such that vaporization losses, premature decomposition, or both of the organic peroxide are avoided or minimized. For example, with di-t-butyl peroxide and 2,5-dimethyl-2,5-di-(t-butylperoxy)hexane, maximum temperatures within the reactor should be maintained at or below 220 degrees Celsius. The maximum useful temperature varies with the selection of catalyst. Examples of useful peroxide catalysts include 1,1-bis(tert-butylperoxy)cyclohexane; n-butyl-4,4-bis(tert-butylperoxyvalerate); 1,1-bis(tert-butylperoxy)-3,3,5-trimethylcyclohexane; 2,2-bis(tert-butylperoxy)butane; dicumylperoxide; tert-butylcumylperoxide; $\alpha\alpha'$-bis(tert-butylperoxypreoxy-isopropyl)benzene; di-tert-butylperoxide (DTBP); 2,5-dimethyl-2,5-di(tert-butylperoxy)hexane; and related compounds.

The Formulated Composition

In some embodiments, the present disclosure provides a polyolefin-based composition made from or containing

(A) an ethylene polymer grafted with an unsaturated monomer covalently bonded to a propylene polymer yielded from the free-radical reactive blending of

(i) 20 to 70 weight percent of a first polymer composition, relative to the total weight of the polyolefin-based composition, made from or containing an ethylene polymer grafted with an unsaturated monomer, and

(ii) 30 to 80 weight percent of a second polymer composition, relative to the total weight of the polyolefin-based composition, made from or containing a propylene polymer, in the presence of

(iii) 0.01 to 3.0 weight percent of a mobile liquid reactant, relative to the total weight of the polyolefin-based composition, made from or containing an organic peroxide.

In some embodiments, the polyolefin-based composition has a melt flow rate in the range of 1.0 to 5.0 grams per 10 minutes, measured according to ASTM D 1238, using a piston load of 2.16 kg and at a temperature of 230 degrees Celsius. In other embodiments, the melt flow rate is 1, 2, 3, 4, or 5 grams per 10 minutes.

In some embodiments, the polyolefin-based composition has a xylene soluble content in the range of 3 to 10 weight percent, relative to the total weight of the polyolefin-based composition. In other embodiments, the xylene soluble content is in the range of 5 to 7 weight percent, relative to the total weight of the polyolefin-based composition. In other embodiments, the xylene soluble content is 5, 5.5, 6.0, 6.5, or 7.0 weight percent, relative to the total weight of the polyolefin-based composition.

In some embodiments, the polyolefin-based composition has a shear rate (*i.e.,* low shear rate) from 500,000 to 800,000 poise, measured at 0.0398 rad/sec.

In some embodiments, the polyolefin-based composition has a shear rate (*i.e.,* high shear rate) from 4,000 to 7,000 poise, measured at 100 rad/sec.

In some embodiments, the polyolefin-based composition has a ratio of low shear viscosity to high shear viscosity of 70:1 to 200:1.

In some embodiments, the polyolefin-based composition has a percent die swell in the range of 20 to 50 percent change in diameter. In other embodiments, the-percent die swell is in the range of 30 to 35. In other embodiments, the percent die swell is 30, 31, 32, 33, 34, or 35.

In some embodiments, the polyolefin-based composition has propylene content in the range of 30 to 60 weight percent propylene-derived units, relative to the total weight of the polyolefin-based composition. In other embodiments, the propylene content is 30, 35, 40, 45, 50, 55, 60, or an intermediate weight percent propylene-derived units, relative to the total weight of the polyolefin-based composition.

In some embodiments, the polyolefin-based composition has an ethylene content in the range of 40 to 70 weight percent ethylene-derived units, relative to the total weight of the polyolefin-based composition. In other embodiments, the ethylene content is 40, 45, 50, 55, 60, 65, or 70, or an intermediate weight percent ethylene-derived units, relative to the total weight of the polyolefin-based composition.

In some embodiments, the polyolefin-based composition has a yellowness index of less than 35. In other embodiments, the yellowness index is in the range of 0.01 to 35.

In some embodiments, the polyolefin-based composition has polyolefins with molecular weights (Mw) of less than 2000 in an amount of less than 5 weight percent, relative to the total weight of the polyolefin-based composition. In other embodiments, the amount is in the range of 0.01 to 5 weight percent, relative to the total weight of the polyolefin-based composition.

In some embodiments, the polyolefin-based composition may be made from or contain a maleated polyolefin having a waxy material content of less than 5 weight percent, a yellowness index of less than 35, and may be useful as an adhesive, a tie-layer adhesive for multi-layered structures, and a compatibilizer.

Additives

In some embodiments, the polyolefin-based composition can include an additives composition made from or containing one or more additives. Examples of additives are adhesion promoters, elastomeric polymers, UV inhibitors, antioxidants, thermal stabilizers, and the like.

Adhesive

In some embodiments, the present disclosure provides for an adhesive made from or containing a polyolefin-based composition.

The adhesive composition can take any form, *e.g.*, hot-melt, pressure sensitive, solvent-based, *etc.,* and may comprise tie-layer and laminate adhesive compositions.

Tie-Layer Structure

In some embodiments, the present disclosure provides for adhesives that are useful as tie-layers for making multi-layer structures such as films and sheets, including barrier films. A film can have a thickness of less than 10 mils while a sheet has a thickness of as least 10 mils. The multi-layer structures have at least two layers in addition to the adhesive layer, which bonds the other layers together. In some embodiments, at least one layer serves as a barrier layer.

Tie-layer adhesives of the present disclosure can be used in numerous multi-layer structures, including structures having from 2 to 11 polymer-based layers.

Multi-Layered Structure

In some embodiments, the present disclosure provides a multi-layered structure made from or containing

(A) a tie-layer adhesive made from or containing

(i) a polyolefin-based composition made from or containing:

(a) a first polymer composition made from or containing an ethylene polymer grafted with an unsaturated monomer, and

(b) a second polymer composition made from or containing a propylene polymer,

wherein the ethylene polymer grafted with an unsaturated monomer is covalently bonded to the propylene polymer;

(B) a polymer layer; and

(C) a substrate layer.

Multi-layer films may be made by coextrusion and may include a polyolefin layer such as LDPE, LLDPE, HDPE, EVA, ethylene-acrylic acid copolymers, ethylene-methacrylic acid copolymers, ethylene-acrylic acid ester copolymers, ethylene-methacrylic acid ester copolymers, ionomers, and similar compounds. Barrier resins for use in the present disclosure may be polar polymers such as ethylene-vinyl alcohol (EVOH) or polyamide resins such as nylon. Other layers may be made from and/or contain a polyester.

Tie-layer adhesives of the present disclosure can be used in numerous multi-layer barrier film constructions. Generic illustrative multi-layer constructions include the following:

∘ PE/tie-layer/barrier/tie-layer/PP/tie-layer/PE

  ○ PE/tie-layer/barrier/tie-layer/PE/tie-layer/PP

  ○ PP/tie-layer/banier/tie-layer/PE/tie-layer/PP

  ○ PE/tie-layer/barrier/tie-layer/PE/tie-layer/PE

  ○ PP/tie-layer/barrier/tie-layer/PP/tie-layer/PP

  ○ PE/tie-layer/barrier/tie-layer/PE

  ○ PE/tie-layer/barrier/tie-layer/PP

  ○ PP/tie-layer/barrier/tie-layer/PP

  ○ PET/tie-layer/barrier/tie-layer/PP/tie-layer/PET

  ○ PET/tie-layer/barrier/tie-layer/PET/tie-layer/PP

  ○ PP/tie-layer/barrier/tie-layer/PET/tie-layer/PP

  ○ PET/tie-layer/barrier/tie-layer/PET/tie-layer/PET

  ○ PP/tie-layer/barrier/tie-layer/PP/tie-layer/PP

  ○ PET/tie-layer/barrier/tie-layer/PET

  ○ PET/tie-layer/barrier/tie-layer/PP

  ○ PP/tie-layer/barrier/tie-layer/PP

Additional examples, where "FCL" represents a food contact layer, include:

  ○ HDPE/tie-layer/EVOH/tie-layer/HDPE

  ○ HDPE/tie-layer/polyamide/tie-layer/HDPE

  ○ EVOH/tie-layer/HDPE/tie-layer/EVOH

  ○ LDPE/tie-layer/polyamide/tie-layer/FCL

  ○ LDPE/tie-layer/EVOH/tie-layer/FCL

  ○ LLDPE/tie-layer/EVOH/tie-layer/FCL

  ○ LLDPE/tie-layer/polyamide/tie-layer/FCL

  ○ HDPE/tie-layer/EVOH/tie-layer/FCL

  ○ HDPE/tie-layer/polyamide/tie-layer/FCL

  ○ HDPE/tie-layer/polyamide/EVOH/polyamide/tie-layer/FCL

In some embodiments, the multi-layered structure can have three layers, having a first polymer layer, a tie-layer, and a second polymer layer. The first polymer layer can have a thickness in the range of 20 to 50 percent, based upon the total thickness of the structure. The tie-layer can have a thickness in the range of 3 to 12 percent, based upon the total thickness of the structure. The second polymer layer can have a thickness in the range of 20 to 50 percent, based upon the total thickness of the structure.

In some embodiments, the multi-layered structure can have five layers, having a first polymer layer, a first tie-layer, a second polymer layer, a second tie-layer, and a third polymer layer. The first polymer layer can have a thickness in the range of 20 to 50 percent, based upon the total thickness of the structure. The first tie-layer can have a thickness in the range of 3 to 12 percent, based upon the total thickness of the structure. The second polymer layer can have a thickness in the range of 3 to 15 percent, based upon the total thickness of the structure. The second tie-layer can have a thickness in the range of 3 to 12 percent, based upon the total thickness of the structure. The third polymer layer can have a thickness in the range of 20 to 50 percent, based upon the total thickness of the structure.

Process for Preparing Polyolefin-Based Compositions

In some embodiments, the present disclosure provides a process containing:

(A) the adding step of combining:

(i) a first polymer composition made from or containing an ethylene polymer grafted with an unsaturated monomer,

(ii) a second polymer composition made from or containing a propylene polymer, and

(iii) a mobile liquid reactant composition made from or containing an organic peroxide;

(B) the free-radical generation step of decomposing the mobile liquid reactant to form free radicals,

(C) the treating step of treating at least one of the polymer components with the free radicals to form reactive sites on the polymer components,

(D) the blending step of agitating the residual non-treated polymer components and the free-radical-treated polymer components,

(E) the reacting step of covalently binding the reactive sites of the free-radical-treated polymer components to the residual non-treated polymer components, other free-radical-treated polymer components, or both, and

(F) the collecting step of collecting the blended, reaction products as the polyolefin-based composition.

Some Other Embodiments

In some embodiments, the present disclosure provides a compatibilizer made from or containing a polyolefin-based composition.

EXAMPLES

The Ethylene Polymer Grafted with an Unsaturated Monomer (1.9%): Equistar Chemicals's PMG 2300 maleated high-density polyethylene having a melt index at 190 degrees Celsius, 2.16 kg (ASTM D1238) of 9.0 grams per 10 minutes; a density of 0.956 grams per cubic centimeter; and a maleic anhydride content (weight percent) of 1.9.

The Ethylene Polymer Grafted with an Unsaturated Monomer (1.2%): Equistar Chemicals's PMG 2572 maleated high-density polyethylene having a melt index at 190 degrees Celsius, 2.16 kg (ASTM D1238) of 3.0 grams per 10 minutes: a density of 0.930 grams per cubic centimeter: and a maleic anhydride content (weight percent) of 1.2.

Control Polypropylene: LyondellBasell's PRO-FAX™ SR257M random copolymer polypropylene, having ethylene as the comonomer, a specific gravity of 0.90, a melt flow rate of 2.0 grams per 10 minutes, and a polydispersity index of 3.3.

Impact Propylene Polymer: LyondellBasell's PROFAX™ PP 8623 very high impact polypropylene copolymer, having a melt flow rate at 230 degrees Celsius, 2.16 kg (ASTM D1238) of 1.5 grams per 10 minutes; a density of 0.902 grams per cubic centimeter; an ethylene content (weight percent) of 19.5%; and a percentage of xylenes solubles (weight percent) of 14.4%.

Mobile Liquid Reactant: A masterbatch of 1.5 weight percent of LUPEROX™ 101 2,5-bis(tert-butyl peroxide)-2,5-dimethylhexane in Equistar Chemicals's PMG 2300 maleated high-density polyethylene, prepared by rotating 1 gallon glass jar containing 1800 g of PMG 2300 pellets with 1.5 weight percent of the organic peroxide under a heat lamp, was used.

An additive package comprising the following components was also used:

(a) 530 ppm of IRGANOX™ 1010 sterically-hindered phenolic antioxidant,

(b) 440 ppm of calcium stearate lubricant, and

(c) 2100 ppm of DSTDP (dioctadecyl 3,3'-thiodipropionate) thioester antioxidant.

For the comparative example (Comparative Example 1), the 1.9% maleated polyethylene and the control polypropylene were dry blended in a 50:50 weight percent ratio with a Lestritz-18 twin screw extrusion with 250 rpm at 230 degrees Celsius at die temperature, followed by pelletization, with a strand cut through water bath. No further additives were added during compounding.

For the exemplified product (Example 2), the 1.9% maleated polyethylene, the impact polypropylene copolymer, and the organic peroxide master batch were dry blended in a 40:50:10 weight percent ratio with a Lestritz-18 twin screw extrusion with 250 rpm at 230 degrees Celsius at die temperature followed by pelletization with strand cut through water bath. No further additives were added during compounding.

Table I

| Test | Comparative Example 1 | Example 2 |
|---|---|---|
| Shear Rate measured at 0.0398 rad/sec, Poise | 50,400 | 673,000 |
| Shear Rate measured at 100 rad/sec, Poise | 5,830 | 5,880 |
| Ratio of Low Shear Rate to High Shear Rate | 8.6 | 114.4 |
| Melt Flow Rate (230 degrees Celsius, 2.16 kg), Grams per 10 minutes | 3.6 | 2.2 |
| Xylene Solubles, percentage | 7.5 | 5.7 |
| Die Swell, percentage | 116 | 34 |
| Yellowness Index | 10.0 | 14.2 |
| DSC Crystallization | Double peak | Single peak |

The exemplified composition shows a ratio of low shear rate to high shear rate more than ten times greater than the comparative example. Yet, the exemplified composition has a die swell that less than one third of the die swell of the comparative example.

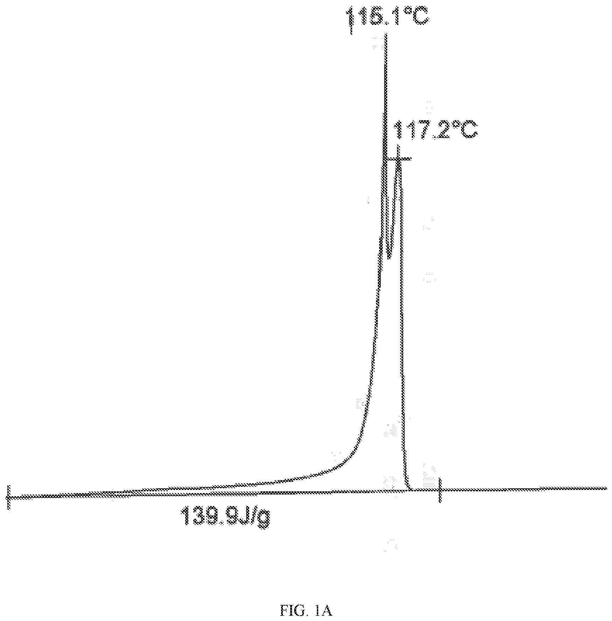

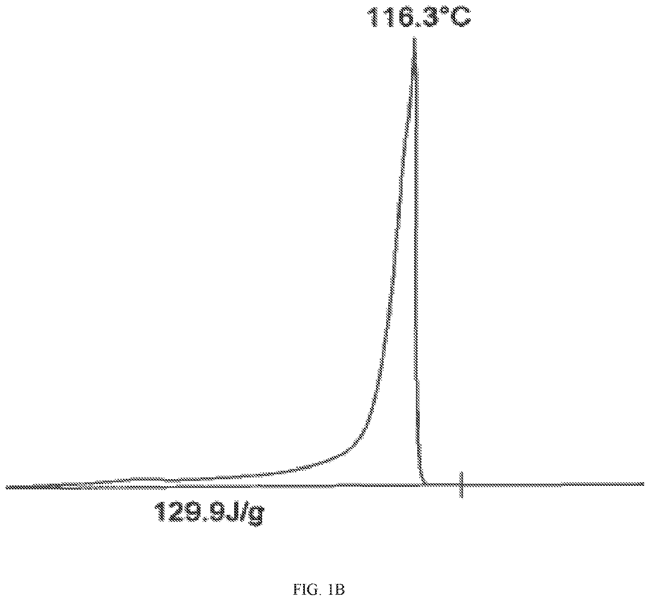

FIG. 1 shows crystallization curves generated by differential scanning calometry (DSC) analysis of (1A) a blend of an impact polypropylene and a maleic anhydride-grafted, high-density polyethylene and (1B) a polymeric composition resulting from a reactive blend of (i) the impact polypropylene, (ii) the maleic anhydride-grafted, high-density polyethylene, and (iii) an organic peroxide. Crystallization curve 1A corresponds to Comparative Example 1 and shows a double peak. Crystallization curve 1B corresponds to Example 2 and shows a single peak for a covalently-bonded polyolefin-based composition. The curves were obtained from a 10 degrees per minute cooling rate from 170 degrees Celsius down to 25 degrees Celsius using a TA DSCII-1000 unit.

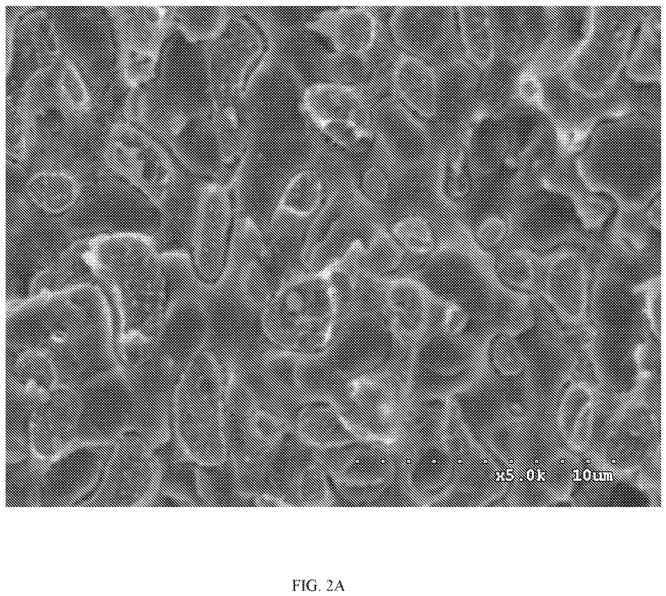

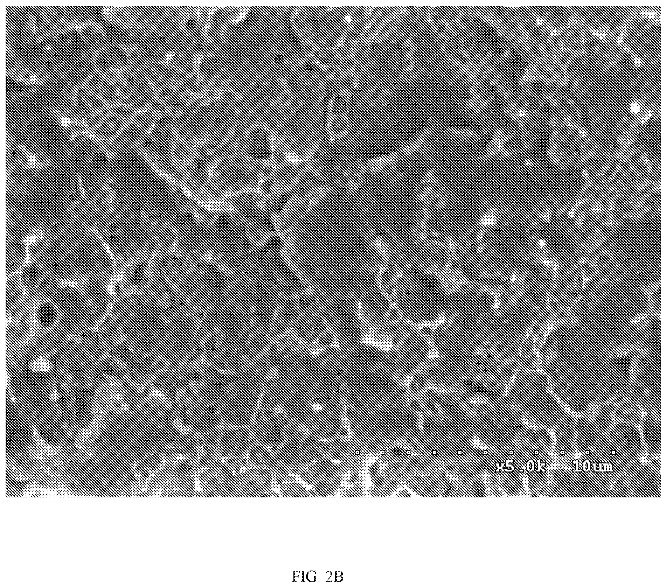

FIG. 2 shows two micrographs obtained using a Hitachi S-3500 Scanning Electron Microscope (SEM) at an accelerated voltage of 5 kV from an extrudate's surface fractured under liquid nitrogen, wherein (2A) is a blend of an impact polypropylene and a maleic anhydride-grafted high density polyethylene and (2B) is a polymeric composition resulting from a reactive blend of (i) the impact polypropylene, (ii) the maleic anhydride-grafted, high-density polyethylene, and (iii) an organic peroxide. Micrograph 2A shows phase boundaries and corresponds to Comparative Example 1. Micrograph 2B shows less defined boundaries and corresponds to Example 2.

For comparative examples and examples comprising some embodiments of the present disclosure, various compounds were formulated and then evaluated to determine the crystallization profile of a compound by Differential Scanning Calorimetry (DSC). The materials were admixed in the weight percents shown in Table II.

Table II

| Component* /Test | C.Ex. 3 | Ex. 4 | C.Ex. 5 | Ex. 6 | Ex. 7 | C.Ex. 8 | Ex. 9 | Ex. 10 | C.Ex. 11 |
|---|---|---|---|---|---|---|---|---|---|
| PMG 2300 | 49.8 | 49.8 | | 69.8 | 49.7 | 49.7 | 49.7 | | |
| PMG 2572 | | | 49.8 | | | | | 49.7 | 49.7 |
| SR257M | | | 49.8 | | 24.8 | 49.7 | | | 49.7 |

(continued)

| Component* /Test | C.Ex. 3 | Ex. 4 | C.Ex. 5 | Ex. 6 | Ex. 7 | C.Ex. 8 | Ex. 9 | Ex. 10 | C.Ex. 11 |
|---|---|---|---|---|---|---|---|---|---|
| PP 8623 | 49.8 | 49.8 | | 29.8 | 24.8 | | 49.7 | 49.7 | |
| Luperox 101 | 0.00 | 0.15 | 0.15 | 0.15 | 0.30 | 0.30 | 0.30 | 0.30 | 0.30 |
| Irganox 1010 | 0.053 | 0.053 | 0.053 | 0.053 | 0.053 | 0.053 | 0.053 | 0.053 | 0.053 |
| CaStearate | 0.044 | 0.044 | 0.044 | 0.044 | 0.044 | 0.044 | 0.044 | 0.044 | 0.044 |
| DSTDP | 0.21 | 0.21 | 0.21 | 0.21 | 0.21 | 0.21 | 0.21 | 0.21 | 0.21 |
| Total | 100 | 100 | 100 | 100 | 100 | 100 | 100 | 100 | 100 |
| DSC Curve, Number Peaks | Double | Single | Double | Single | Double | Double | Single | Single | Double |

**Claims**

1. A polyolefin-based composition comprising:

   (A) a first polymer composition comprising an ethylene polymer grafted with an unsaturated monomer, and
   (B) a second polymer composition comprising a propylene polymer,

   wherein the ethylene polymer grafted with an unsaturated monomer is covalently bonded to the propylene polymer; and wherein
   the propylene polymer is an impact polypropylene copolymer.

2. The polyolefin-based composition of claim 1, wherein the ethylene polymer is a high-density polyethylene.

3. The polyolefin-based composition of claim 1, wherein the unsaturated monomer is maleic anhydride.

4. The polyolefin-based composition of claim 1, wherein the ethylene polymer grafted with an unsaturated monomer is a high-density polyethylene (HDPE) grafted with maleic anhydride.

5. The polyolefin-based composition of claim 1, wherein the ethylene polymer grafted with an unsaturated monomer comprises:

   (A) a melt index from 2.0 to 20.0 grams per 10 minutes; and
   (B) a density in a range from 0.930 to 0.980 grams per cubic centimeter.

6. The polyolefin-based composition of claim 1, wherein the impact polypropylene copolymer comprises:

   (A) a melt flow rate from 1.0 to 10.0 grams per 10 minutes;
   (B) a total content of ethylene-derived units in an amount from 5 to 30 weight percent, based upon the total weight of the impact polypropylene copolymer; and
   (C) a total content of propylene-derived units in an amount from 70 to 95 weight percent, based upon the total weight of the impact polypropylene copolymer.

7. The polyolefin-based composition of claim 1, further comprising an additives composition having one or more additives.

8. The polyolefin-based composition of claim 1, comprising less than 5 weight percent of polyolefins having a molecular weight (Mw) less than 2000, relative to the total weight of the polyolefin-based composition.

9. A multi-layered structure comprising:

   (A) a tie-layer adhesive comprising:

       (i) a polyolefin-based composition according to claim 1

(B) a polymer layer; and
(C) a substrate layer.

**Patentansprüche**

1. Zusammensetzung auf Polyolefinbasis, umfassend:

   (A) eine erste Polymerzusammensetzung, umfassend ein Ethylenpolymer, das mit einem ungesättigten Monomer gepfropft ist, und
   (B) eine zweite Polymerzusammensetzung, die ein Propylenpolymer umfasst,

   wobei das mit einem ungesättigten Monomer gepfropfte Ethylenpolymer kovalent an das Propylenpolymer gebunden ist; und wobei
   das Propylenpolymer ein schlagzähes Polypropylencopolymer ist.

2. Zusammensetzung auf Polyolefinbasis nach Anspruch 1, wobei das Ethylenpolymer ein Polyethylen mit hoher Dichte ist.

3. Zusammensetzung auf Polyolefinbasis nach Anspruch 1, wobei das ungesättigte Monomer Maleinsäureanhydrid ist.

4. Zusammensetzung auf Polyolefinbasis nach Anspruch 1, wobei das mit einem ungesättigten Monomer gepfropfte Ethylenpolymer ein Polyethylen mit hoher Dichte (HDPE) ist, das mit Maleinsäureanhydrid gepfropft ist.

5. Zusammensetzung auf Polyolefinbasis nach Anspruch 1, wobei das mit einem ungesättigten Monomer gepfropfte Ethylenpolymer aufweist:

   (A) einen Schmelzindex von 2,0 bis 20,0 Gramm pro 10 Minuten; und
   (B) eine Dichte im Bereich von 0,930 bis 0,980 Gramm pro Kubikzentimeter.

6. Zusammensetzung auf Polyolefinbasis nach Anspruch 1, wobei das schlagzähe Polypropylencopolymer umfasst:

   (A) eine Schmelzflussrate von 1,0 bis 10,0 Gramm pro 10 Minuten;
   (B) einen Gesamtgehalt an von Ethylen abgeleiteten Einheiten in einer Menge von 5 bis 30 Gewichtsprozent, bezogen auf das Gesamtgewicht des schlagzähen Polypropylencopolymers; und
   (C) einen Gesamtgehalt an von Propylen abgeleiteten Einheiten in einer Menge von 70 bis 95 Gewichtsprozent, bezogen auf das Gesamtgewicht des schlagzähen Polypropylencopolymers.

7. Zusammensetzung auf Polyolefinbasis nach Anspruch 1, des Weiteren umfassend eine Additivzusammensetzung mit einem oder mehreren Additiven.

8. Zusammensetzung auf Polyolefinbasis nach Anspruch 1, umfassend weniger als 5 Gewichtsprozent Polyolefine mit einem Molekulargewicht (Mw) von weniger als 2000, bezogen auf das Gesamtgewicht der Zusammensetzung auf Polyolefinbasis.

9. Mehrschichtige Struktur, umfassend:

   (A) einen Haftschichtklebstoff, umfassend:

      (i) eine Zusammensetzung auf Polyolefinbasis nach Anspruch 1,

   (B) eine Polymerschicht; und
   (C) eine Substratschicht.

**Revendications**

1. Composition à base de polyoléfine comprenant :

(A) une première composition polymère comprenant un polymère d'éthylène greffé par un monomère insaturé et

(B) une deuxième composition polymère comprenant un polymère de propylène,

le polymère d'éthylène greffé par un monomère insaturé étant lié de manière covalente au polymère de propylène ; et le polymère de propylène étant un copolymère de polypropylène résistant aux chocs.

2. Composition à base de polyoléfine selon la revendication 1, le polymère d'éthylène étant un polyéthylène haute densité.

3. Composition à base de polyoléfine selon la revendication 1, le monomère insaturé étant l'anhydride maléique.

4. Composition à base de polyoléfine selon la revendication 1, le polymère d'éthylène greffé par un monomère insaturé étant un polyéthylène haute densité (HDPE) greffé par de l'anhydride maléique.

5. Composition à base de polyoléfine selon la revendication 1, le polymère d'éthylène greffé par un monomère insaturé présentant :

(A) un indice de fluidité à chaud de 2,0 à 20,0 grammes par 10 minutes ; et

(B) une densité dans une plage allant de 0,930 à 0,980 grammes par centimètre cube.

6. Composition à base de polyoléfine selon la revendication 1, le copolymère de polypropylène résistant aux chocs présentant :

(A) un indice de fluidité à chaud de 1,0 à 10,0 grammes par 10 minutes ;

(B) une teneur totale en motifs dérivés de l'éthylène en une quantité de 5 à 30 pour cent en poids, sur la base du poids total du copolymère de polypropylène résistant aux chocs ; et

(C) une teneur totale en motifs dérivés du propylène en une quantité de 70 à 95 pour cent en poids, sur la base du poids total du copolymère de polypropylène résistant aux chocs.

7. Composition à base de polyoléfine selon la revendication 1, comprenant en outre une composition d'additifs comprenant un ou plusieurs additifs.

8. Composition à base de polyoléfine selon la revendication 1, comprenant moins de 5 pour cent en poids de polyoléfines présentant un poids moléculaire (Mw) inférieur à 2000, par rapport au poids total de la composition à base de polyoléfine.

9. Structure multicouche comprenant :

(A) un adhésif de couche de liaison comprenant :

(i) une composition à base de polyoléfine selon la revendication 1

(B) une couche de polymère ; et

(C) une couche de substrat.

FIG. 1A

116.3°C

129.9J/g

FIG. 1B

FIG. 2A

FIG. 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012329929 A
- US 2003050401 A
- WO 2015142602 A
- US 6385777 B
- US 20070054142

### Non-patent literature cited in the description

- Test Method for Yellowness Index of Plastics. *ASTM D 1925*
- **ROSS et al.** An Improved Gas-Phase Polypropylene Process. *Ind. Eng. Chem. Prod. Res. Dev.,* 1985, vol. 24, 149-154